# EUROPEAN PATENT APPLICATION

(11) **EP 4 429 069 A1**
(43) Date of publication of application: **11.09.2024**
(21) Application number: 24700510.1
(22) Date of filing: 25.01.2024
(51) Int. Cl.: H02J 7/34, H02J 7/00

(54) **ELECTRONIC DEVICE AND METHOD FOR CONTROLLING POWER PROVIDED FROM ELECTRONIC DEVICE TO EXTERNAL ELECTRONIC DEVICE**

(30) Priority: 25.01.2023 KR 20230009757; 10.03.2023 KR 20230031629
(71) Applicant: Samsung Electronics Co., Ltd., Suwon-si, Gyeonggi-do 16677 (KR)
(72) Inventor: PARK, Youngmin, Suwon-si, Gyeonggi-do 16677 (KR); SHIN, Dongrak, Suwon-si, Gyeonggi-do 16677 (KR); IM, Hyungjae, Suwon-si, Gyeonggi-do 16677 (KR)
(74) Representative: Gulde & Partner
(86) International application number: PCT/KR2024/001179
(87) International publication number: WO 2024/158219

(57) **Abstract**

An electronic device according to an embodiment may include a battery, a USB connector, first charging circuitry, second charging circuitry, memory, and a processor, wherein the memory stores instructions configured to, when executed by the processor, cause the electronic device to control the second charging circuitry to output second power of a designated second voltage higher than a first voltage of the battery using the second charging circuitry through a designated pin associated with power transfer of the USB connector, based on identification of connection of an external electronic device through the USB connector, obtain information associated with an operable voltage of the external electronic device while the second power is output, suspend the output of the second power based on the obtained information, and control to the first charging circuitry to output first power of the first voltage from the battery through the designated pin, and may include another embodiment.

## Description

### [Technical Field]

Various embodiments of the disclosure relate to a method for controlling power provided by an electronic device to an external electronic device.

### [Background Art]

With the remarkable development of information and communication technology and semiconductor technology, the proliferation and use of various electronic devices have been rapidly increasing. For example, various electronic devices such as a mobile phone, an MP3 player, a portable multimedia player, a tablet PC, a smartphone, and an electronic book terminal are provided to a user, and the user may access various contents while carrying such various electronic devices.

Such electronic devices may be connected to various external electronic devices, and provide expanded functionality through connections to the external electronic devices. For example, the electronic devices are connected to various types of on-the-go (OTG) devices such as a speaker, an earphone, memory, and a fan, through a connector, and are implemented to perform data transmission or reception while providing power to the OTG devices.

### [Detailed Description of the Invention]

### [Technical Problem]

When an OTG device (e.g., a universal serial bus (USB) audio device, a USB Type-C earphone, or a digital-to-analog converter (DAC)) (hereinafter, also referred to as an external electronic device) is connected, an electronic device may supply power to the external electronic device so that the external electronic device can start an operation. The external electronic device may perform a designated function (e.g., a digital sound source playback function, an external sound recording function, or other OTG functions) through USB communication with the electronic device by using power supplied from the electronic device.

When being connected to the external electronic device, the electronic device may be configured to provide power of a fixed second voltage (e.g., about 5V) rather than a first voltage of a battery to the external electronic device. When the first voltage (e.g., about 3.4V to about 4.4V) of the battery is lower than the second voltage, the electronic device may perform a boost operation for boosting the first voltage of the power provided from the battery to the second voltage to provide the power of the first voltage to the external electronic device. As described above, when the external electronic device is configured to be provided with the power of the fixed second voltage (e.g., about 5V), the electronic device may perform the boosting operation to output the second voltage even through the external electronic device requires the power of the first voltage lower than the second voltage, whereby unnecessary current consumption may occur.

### [Technical Solution]

An electronic device according to an embodiment includes a battery, a universal serial bus (USB) connector, first charging circuitry, second charging circuitry, memory, and a processor. The memory according to an embodiment stores instructions configured to, when executed by the processor, cause the electronic device to perform control so that second power of a designated second voltage higher than a first voltage of the battery is output using the second charging circuitry through a designated pin in association with power transfer of the USB connector, based on identification of connection of an external electronic device through the USB connector. The memory according to an embodiment stores instructions configured to, when executed by the processor, cause the electronic device to acquire information associated with an operable voltage of the external electronic device while the second power is output. The memory according to an embodiment stores instructions configured to, when executed by the processor, cause the electronic device tosuspend the output of the second power, based on the acquired information and perform control so that first power of the first voltage from the battery is output using the first charging circuitry through the designated pin.

A method for controlling power provided by an electronic device to an external electronic device according to an embodiment includes identifying connection of the external electronic device through a USB connector. The method according to an embodiment includes outputting second power of a designated second voltage higher than a first voltage of a battery by using second charging circuitry through a designated pin in association with power transfer of the USB connector, based on the identification of the connection of the external electronic device. The method according to an embodiment includes obtaining information associated with an operable voltage of the external electronic device while the second power is output. The method according to an embodiment includes suspending the output of the second power, based on the acquired information, and outputting first power of the first voltage from the battery by using first charging circuitry through the designated pin.

With respect to a non-transitory storage medium storing instructions according to an embodiment, the instructions are configured to, when executed by an electronic device, cause the electronic device to identify connection of an external electronic device through a USB connector, output second power of a designated second voltage higher than a first voltage of a battery by using second charging circuitry through a designated pin in association with power transfer of the USB connector, based on the identification of the connection of the external electronic device, obtain information associated with an operable voltage of the external electronic device while the second power is output, and suspend the output of the second power, based on the obtained information and output first power of the first voltage from the battery by using first charging circuitry through the designated pin.

### [Advantageous Effects]

According to an embodiment, an electronic device and a method for controlling power provided by an electronic device to an external electronic device are provided, in which during the connection to the external electronic device, when an operating voltage of the external electronic device is equal to or higher than a second voltage of a battery, the second voltage of a battery may be boosted to a first voltage through a first circuit so that first power of the first voltage can be provided to the external electronic device, and when the operating voltage of the external electronic device is lower than the second voltage, second power of the second voltage may be provided to the external electronic device from the battery through a second circuit.

According to an embodiment, an electronic device and a method for controlling power provided by an electronic device to an external electronic device are provided, in which during connection to an external electronic device, when it identified that an operating voltage of the external electronic device is lower than a second voltage of a battery, a first circuit path is switched to a second circuit path so that second power of a second voltage can be provided to the external electronic device from the battery without an unnecessary boosting operation, and recognition of the external electronic device again due to suspension of power transfer between the electronic device and the external electronic device can be also prevented during the switching from the first circuit path to the second circuit path.

### [Brief Description of Drawings]

FIG. 1 is a block diagram illustrating an electronic device in a network environment according to an embodiment.
FIG. 2 is a block diagram illustrating an electronic device and an external electronic device according to an embodiment.
FIG. 3 is a flow chart illustrating an operation of controlling power provided by an electronic device to an external electronic device during connection between the electronic device and the external electronic device according to an embodiment
FIG. 4 illustrates a graph of a change in a voltage when an electronic device outputs first power of a first voltage from a battery by using first charging circuitry after suspending output of second power of a second voltage using second charging circuitry through a VBUS according to an embodiment
FIG. 5A illustrates pins of a USB connector according to an embodiment.
FIG. 5B is a table illustrating descriptions of pins of a USB connector according to various embodiments.
FIG. 6 illustrates software modules operating in a processor when switching a USB output voltage, based on a VID or a PID of an external electronic device according to an embodiment.
FIG. 7 is a flow chart illustrating an operation in a case where an electronic device switches, based on a VID or a PID of an external electronic device, second power of a second voltage, which is being provided to the external electronic device, to first power of a first voltage of a battery according to an embodiment
FIG. 8 illustrates software modules operating in a processor in a case of switching a USB output voltage, based on minimum operable voltage of an external electronic device, acquired through UVDM communication with the external electronic device according to an embodiment.
FIG. 9 is a flow chart illustrating an operation in a case where an electronic device switches, based on information on minimum operable voltage of an external electronic device, second power of a second voltage, which is being provided to the external electronic device, to first power of a first voltage of a battery according to an embodiment.

### [Mode for Carrying out the Invention]

Hereinafter, an electronic device according to various embodiments is described with reference to accompanying drawings. The term "user" used in various embodiments may refer to a person who uses an electronic device, or a device (for example, an artificial intelligence electronic device) which uses an electronic device.

Terms used in the disclosure are merely used to describe specified embodiments and may not be intended to limit the scope of other embodiments. The terms of a singular form may include plural forms unless otherwise specified. All of the terms used herein, which include technical or scientific terms, may have the same meaning that is generally understood by those skilled in the art. It will be further understood that terms, which are defined in a dictionary, may be interpreted as having the same or similar meanings as or to contextual meanings of the relevant related art and not in an idealized or overly formal way, unless expressly so defined herein in the disclosure. In some cases, even if terms defined in the disclosure are used, the terms should not be interpreted as excluding embodiments of the disclosure.

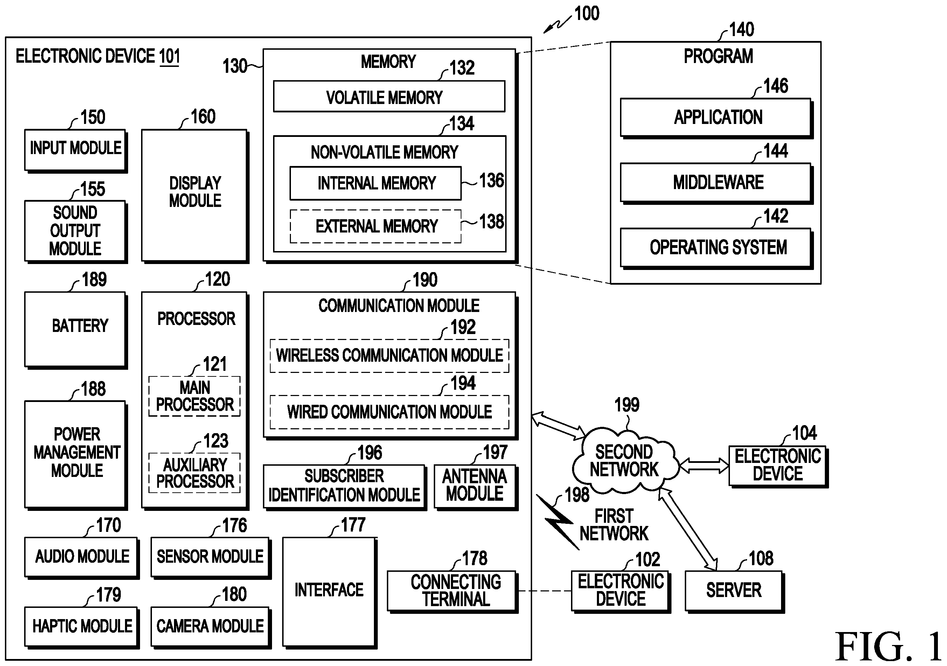

FIG. 1 is a block diagram illustrating an electronic device 101 in a network environment 100 according to embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

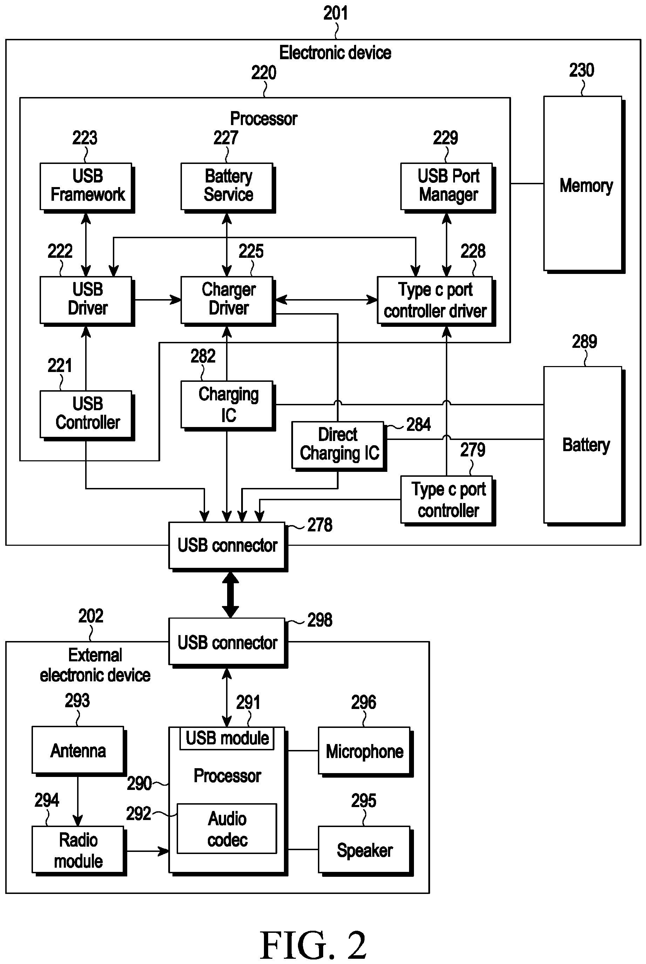

FIG. 2 is a block diagram illustrating an electronic device 201 and an external electronic device 202 according to an embodiment.

Referring to FIG. 2, an electronic device 201 (e.g., the electronic device 101 of FIG. 1) according to an embodiment may be configured to include a USB connector 278, a Type-C port controller 279, a charging integrated chip (IC) 282, a direct charging IC 284, a battery 289, and a processor 220. The electronic device 201 is not limited thereto, and may be configured to further include various elements, or configured to exclude some of the elements. The electronic device 201 according to an embodiment may further include all or a part of the electronic device 101 illustrated in FIG. 1.

The USB connector 278 according to an embodiment may include physical connecting pins for USB-type communication between the electronic device 201 and an external electronic device 202. The USB connector 278 according to an embodiment may include a USB Type-C plug or a USB Type-C receptacle.

The Type-C port controller (or a port controller) 279 according to an embodiment may perform power delivery (PD) communication through a configuration channel (CC) pin of the USB connector 278. The port controller 279 according to an embodiment may identify whether to transmit power to the external electronic device 202 or to transmit or receive data to or from the external electronic device 202 by using pins of the USB connector 278.

The charging IC (e.g., second charging circuitry) 282 according to an embodiment may charge the battery 289 by using power wirelessly or wiredly received from the outside, or may output the power from the battery 289 into second power of a designated second voltage and output the same through a VBUS of the USB connector 278.

The direct charging IC (e.g., first charging circuitry) 284 according to an embodiment may perform high-speed charging of the battery 289 at a pre-configured high voltage and/or high current by using power wiredly received from the outside, or may output first power of a first voltage from the battery 289 through the USB connection 278 without voltage conversion.

The processor 220 according to an embodiment may perform an overall control operation of the electronic device 201. The processor 220 according to an embodiment may perform control so that power (e.g., second power) of a designated second voltage higher than a first voltage of the battery 289 is output through second charging circuitry 282 by using a designated pin (e.g., a VBUS path) in association with power transfer of the USB connector 278, based on connection of the external electronic device 202 through the USB connector 278. The processor 220 according to an embodiment may acquire information associated with operable voltage information of the external electronic device 202 while the second power of the designated second voltage is provided through the designated pin (e.g., a VBUS pin) of the USB connector 278. According to an embodiment, the information associated with the operable voltage information of the external electronic device 202 may include identification information (e.g., a vender ID (VID)) or a product ID (PID)) of the external electronic device 202, information on minimum operable voltage of the external electronic device 202, a designated response or PD message promised between the electronic device and the external electronic device or defined by a vendor. The processor 220 according to an embodiment may identify, based on the identification information (e.g., the VID or the PID) of the external electronic device 202, the information on minimum operable voltage of the external electronic device 202, or the designated response or PD message promised between the electronic device 201 and the external electronic device 202 or defined by the vendor, whether to change the second power of the second voltage, provided to the external electronic device 202, to the first voltage of the first voltage of the battery 289, and provide the same. When it is identified to change the second power of the second voltage, being provided to the external electronic device 202, to the first power of the first voltage of the battery 289 and provide the same, the processor 220 according to an embodiment may suspend the provision of the second power of the second voltage using the second charging circuitry 282 and perform control so that the first power of the first voltage from the battery 289 is provided using the first charging circuitry 284 through a VBUS.

The processor 220 according to an embodiment may include a USB controller 221, a USB driver 222, a USB framework 223, a charger deriver 225, a battery service 227, a Type-C port controller driver 228, and/or a USB port manager 229. Each of the USB controller 221, the USB driver 222, the USB framework 223, the charger driver 225, the battery service 227, the Type-C port controller driver 228, and/or the USB port manager 229 may be a software program module, and at least a part thereof may be pre-loaded on the electronic device 101, or may be downloaded from an external device.

The USB controller 221 according to an embodiment may perform USB data communication using a USB D+/D- line. The USB driver 222 according to an embodiment may drive the USB controller 221. The USB framework 223 according to an embodiment may provide information required for USB data communication performed by the USB controller 221. The charger driver 225 according to an embodiment may drive the charging IC 282 or the direct charging IC 284. The battery service 227 according to an embodiment may perform a service associated with charging/discharging of the battery 289. The Type-C port controller driver 228 according an embodiment may drive the Type-C port controller 279. The USB port manager 229 according to an embodiment may perform USB port management.

When the external electronic device 202 is connected through the USB connector 278, the processor 220 according to an embodiment may recognize (or detect) the connection of the external electronic device 202, based on an Rd resistance value of the Type-C port controller 279, through the Type-C port controller driver 228. The Type-C port controller driver 228 according to an embodiment may identify whether the electronic device 201 takes a power role or a data role, based on that the connection of the external electronic device 202 is recognized. The Type-C port controller driver 228 according to an embodiment may provide the charger driver (or the battery driver) 225 with a Vbus on control signal when the electronic device 201 is identified to take the power role. The charger driver (or the battery driver) 225 according to an embodiment may perform, based on the Vbus on signal, control so that second power of a designated second voltage (e.g., about 5V) higher than a first voltage (e.g., about 3.4V to about 4.4V) of the battery 289 is output through the second charging circuitry 282 by using a designated pin (e.g., a VBUS path or a VBUS pin) in association with power transfer of the USB connector 278.

The processor 220 according to an embodiment may cause the second power to be output using the VBUS path of the USB connector 278 through the Type-C port controller driver 228 and the charger driver (or the battery driver) 225, and then may perform control through the USB driver 222 so that a host mode is turned on (or in an ON state), perform a USB enumeration process with the external electronic device 202 by executing an extensible host controller interface (XHCI) driver, based on that the host mode is turned on (or in an ON state), and acquire identification information (e.g., a VID and/or a PID) of the external electronic device 202 in the USB enumeration process. The enumeration process according to an embodiment may correspond to a process of performing an operation of detecting whether the external electronic device 202 is connected to a bus, recognizing the external electronic device 202, and loading an appropriate driver.

The processor 220 according to an embodiment may cause the second power to be output using the VBUS path of the USB connector 278, and then acquire information on minimum operable voltage of the external electronic device 202 through UVDM communication while performing PD communication through the Type-C port controller driver 228.

The processor 220 according to an embodiment may receive a designated response or a designated PD message defined by a vendor or promised between the electronic device 201 and the external electronic device 202 through USB communication in the state where the second power is output using the VBUS path of the USB connector 278.

The processor 220 according to an embodiment may identify, based on the identification information (e.g., the VID or the PID) of the external electronic device 202, the information on minimum operable voltage of the external electronic device 202, or the designated response or PD message defined by the vendor or promised between the electronic device 201 and the external electronic device 202, whether to change the second power of the second voltage, being provided to the external electronic device 202, to the first power of the first voltage of the battery 289 and provide the same.

The electronic device 201 according to an embodiment may further include memory (e.g., the memory 130 of FIG. 1), and may store various pieces of data generated during execution of a program 140 including a program (e.g., the program 140 of FIG. 1) used for an operation of controlling power provided to the external electronic device 202 using the battery 289.

The external electronic device 202 (e.g., the electronic device 102 of FIG. 1) according to an embodiment may correspond to an on-the-go (OTG) device which is connected to the electronic device 201 and performs a designated function while receiving power provided from the electronic device 201. According to an embodiment, the external electronic device 202 may include a speaker, an earphone, memory, or a fan, and may be another device if the device is connected to the electronic device 201 and can perform data transmission or reception while receiving power. In various embodiments of the disclosure, a case where the external electronic device 202 is a universal serial bus (USB) audio device (or a USB Type-C earphone or a digital-to-analog converter (DAC)) is described as an example.

The external electronic device 202 according to an embodiment may include a USB connector 298, a processor 290, an antenna 293, a radio module 294, a speaker 295, and/or a microphone 296.

The USB connector 298 according to an embodiment may include physical connecting pins for performing USB-type communication with the electronic device 201 by the external electronic device 202. The USB connector 298 according to an embodiment may include a USB Type-C plug or a USB Type-C receptacle.

The processor 290 according to an embodiment may include a USB module 291 and an audio codec 292. The USB module 291 and the audio codec 292 according to an embodiment may be software modules executed by the processor 290. The USB module 291 and the audio codec 292 according to an embodiment may be included in separate pieces of hardware, respectively and executed. Audio data may be transmitted or received by performing USB data communication using a USB D+/D-line while receiving power provided from the electronic device 201 by using a USB VBUS line through the USB module 291.

According to an embodiment, the processor 290 may convert an FM signal received through the antenna 293 into FM audio data through the radio module 294, and transfer the converted FM audio data to the electronic device 201 through USB data communication, or output the same through the speaker 295. According to an embodiment, the processor 290 may record an audio signal received through the microphone 296, and transfer the recorded audio data to the electronic device 201 through USB data communication. According to an embodiment, the processor 290 may perform control so that audio data provided from the electronic device 201 through the USB data communication is reproduced using the audio codec 292 and is output through the speaker 295.

When the electronic device 201 is connected through the USB connector 298, the processor 290 according to an embodiment may receive the second power of the designated second voltage (e.g., about 5V) higher than the first voltage (e.g., about 3.4V to about 4.4V) of the battery 289, provided from the electronic device 201, by using the VBUS path.

The processor 290 according to an embodiment may perform the USB enumeration process with the electronic device 201 while receiving the second power of the second voltage (e.g., about 5V) from the electronic device 201, and may provide the electronic device 201 with the identification information (the VID and/or the PID) of the external electronic device 202 in the USB enumeration process. The processor 290 according to an embodiment may transmit the information on minimum operable voltage of the external electronic device 202 to the electronic device 201 through the PD communication-based UVDM communication while receiving the second power of the second voltage (e.g., about 5V) from the electronic device 201. The processor 290 according to an embodiment may transmit the designated response or the designated PD message defined by the vendor or promised between the electronic device 201 and the external electronic device 202 while receiving the second power of the second voltage (e.g., about 5V) from the electronic device 201. The identification information (e.g., the VID or the PID) of the external electronic device 202, the information on minimum operable voltage of the external electronic device 202, or the designate response or PD message defined by the vendor or promised between the electronic device 201 and the external electronic device 202 according to an embodiment may be used when the electronic device 201 identifies whether to change the second power of the second voltage, being provided to the external electronic device 202, to the first power of the first voltage of the battery 289 and provide the same.

An electronic device (e.g., an electronic device 101 of FIG. 1 or an electronic device 201 of FIG. 2) according to an embodiment includes a battery (e.g., the battery 189 of FIG. 1 or the battery 289 of FIG. 2), a universal serial bus (USB) connector (e.g., the connection terminal 178 of FIG. 1 or the USB connector 278 of FIG. 2), first charging circuitry (e.g., the direct charging IC 284 of FIG. 2), second charging circuitry (e.g., the charging IC 282 of FIG. 2), memory (e.g., the memory 230 of FIG. 2), and a processor (e.g., the processor 120 of FIG. 1 or the processor 220 of FIG. 2). The memory according to an embodiment stores instructions configured to, when executed by the processor, cause the electronic device to control to the second charging circuitry to output second power of a designated second voltage higher than a first voltage of the battery through a designated pin (e.g., a VBUS path or a VBUS pin) associated with power transfer of the USB connector, based on identification of connection of an external electronic device through the USB connector. The designated second voltage may be a constant voltage of a predetermined voltage value. in comparison, the first voltage may be a voltage value within a range of voltages. The voltage value of the designated second voltage may be greater than the voltage value of the first voltage. The memory according to an embodiment is configured to, when executed by the processor, cause the electronic device to obtain information associated with an operable voltage of the external electronic device while the second power is output. The memory according to an embodiment is configured to, when executed by the processor, cause the electronic device to suspend the output of the second power, based on the obtained information. The memory according to an embodiment is configured to, when executed by the processor, cause the electronic device to perform control the first charging circuitry to output first power of the first voltage from the battery through the designated pin.

The instructions according to an embodiment may be further configured to, when executed by the processor, cause the electronic device to identify the connection of the external electronic device by detecting connection through a configuration channel (CC) pin of the USB connector.

The designated pin according to an embodiment may correspond to a VBUS pin.

The information associated with the operable voltage of the external electronic device according to an embodiment may include identification information of the external electronic device, information on minimum operable voltage of the external electronic device, and a promised or designated response or a designated power delivery (PD) message between the electronic device and the external electronic device.

The instructions according to an embodiment may be further configured to, when executed by the processor, cause the electronic device to obtain a VID and/or a PID as the identification information of the external electronic device through performing of USB enumeration with the external electronic device.

The instructions according to an embodiment may be further configured to, when executed by the processor, cause the electronic device to receive the information on minimum operable voltage of the external electronic device through PD communication-based UVDM communication with the external electronic device.

The instructions according to an embodiment may be further configured to, when executed by the processor, cause the electronic device to receive the promised or designated response or the designated power delivery (PD) message between the electronic device and the external electronic device through USB communication with the external electronic device.

The instructions according to an embodiment may be further configured to, when executed by the processor, cause the electronic device to recognize the external electronic device in a state in which the second power is output through the VBUS path of the USB connector, and ignore the recognition of the external electronic device in case that the recognition of the external electronic device corresponds to a first recognition after the connection through the CC pin of the USB connector

The instructions according to an embodiment may be further configured to, when executed by the processor, cause the electronic device to perform, based on the recognition of the external electronic device, a function of the external electronic device in case that the recognition of the external electronic device does not correspond to the first recognition after the connection through the CC pin of the USB connector.

The external electronic device according to an embodiment may correspond to an on-the-go (OTG) device. The external electronic device according to an embodiment may include a USB audio device, a USB Type-C earphone, or a digital-to-analog converter (DAC).

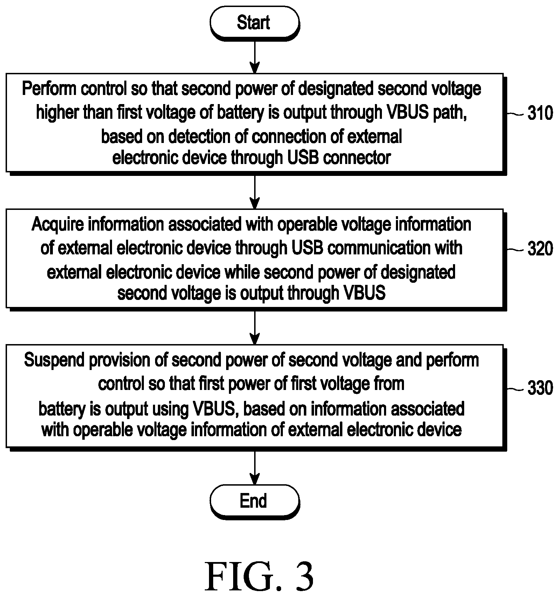

FIG. 3 is a flow chart illustrating an operation of controlling power provided by an electronic device to an external electronic device during connection between the electronic device and the external electronic device according to an embodiment.

Referring to FIG. 3, a processor (e.g., the processor 120 of FIG. 1 or the processor 201 of FIG. 2) of an electronic device (e.g., the electronic device 101 of FIG. 1 or the electronic device 201 of FIG. 2) according to an embodiment may perform at least one operation among operations 310 to 330.

In operation 310, the processor 220 according to an embodiment may perform control so that second power of a designated second voltage higher than a first voltage of the battery 289 is output through the second charging circuitry 282 by using a VBUS path of the USB connector 278, based on detection of connection of the external electronic device 202 through the USB connector 278.

In operation 320, the processor 220 according to an embodiment may acquire information associated with operable voltage information of the external electronic device 202 (e.g., information on minimum operable voltage of the external electronic device 202) while the second power of the designated second voltage is provided through the VBUS of the USB connector 278. According to an embodiment, the information associated with the information on minimum operable voltage of the external electronic device 202 may include identification information (e.g., a vender ID (VID) or a product ID (PID)) of the external electronic device 202, information on minimum operable voltage of the external electronic device 202, and a designated response or PD message defined by a vendor or promised between the electronic device 201 and the external electronic device 202. The processor 220 according to an embodiment may identify, based on the identification information (e.g., the VID or the PID) of the external electronic device 202, the minimum operable voltage of the external electronic device 202, or the designated response or PD message defined by the vender or promised between the electronic device 201 and the external electronic device 202, whether to change second power of a second voltage, being provided to the external electronic device 202, to first power of a first voltage of the battery 289, and provide the same.

In operation 330, the processor 220 according to an embodiment may suspend the provision of the second power of the second voltage using the second charging circuitry 282 and perform control so that the first power of the first voltage from the battery 289 is output through the VBUS by using the first charging circuitry 284, based on the information associated with the operable voltage information of the external electronic device 202. The processor 220 according to an embodiment may suspend the provision of the second power of the second voltage using the second charging circuitry 282 and perform control so that the first power of the first voltage from the battery 289 is provided through the VBUS by using the first charging circuitry 284 when it is identified based on the information associated with the information on minimum operable voltage of the external electronic device 202 that the second power of the second voltage, being provided to the external electronic device 202, is changed to the first power of the first voltage of the battery 289 and provided.

A method for controlling power provided by an electronic device (e.g., the electronic device 101 of FIG. 1 or the electronic device 201 of FIG. 2) to an external electronic device includes identifying connection of the external electronic device through a USB connector (e.g., the connection terminal 178 of FIG. 1 or the USB connector 278 of FIG. 2). The method according to an embodiment includes outputting second power of a designated second voltage higher than a first voltage of a battery (e.g., the battery 189 of FIG. 1 or the battery 289 of FIG. 2) by using second charging circuitry (e.g., the charging IC 282 of FIG. 2) through a designated pin (e.g., a VBUS path or a VBUS pin) associated with power transfer of the USB connector, based on the identification of the connection of the external electronic device. The method according to an embodiment includes obtaining information associated with an operable voltage of the external electronic device while the second power is output. The method according to an embodiment includes suspending the output of the second power, based on the obtained information, and outputting first power of the first voltage from the battery by using first charging circuitry (e.g., the direct charging IC 284 of FIG. 2) through the designated pin.

In the method according to an embodiment, the designated pin associated with the power transfer may correspond to a VBUS pin.

The method according to an embodiment may include identifying the connection of the external electronic device by detecting connection through a configuration channel (CC) pin of the USB connector.

In the method according to an embodiment, the information associated with the operable voltage of the external electronic device may include identification information of the external electronic device, information on minimum operable voltage of the external electronic device, and a promised or designated response or a designated power delivery (PD) message between the electronic device and the external electronic device.

The method according to an embodiment may include obtaining a VID and/or a PID as the identification information of the external electronic device through performing of USB enumeration with the external electronic device.

The method according to an embodiment may include receiving the information on minimum operable voltage of the external electronic device through PD communication-based UVDM communication with the external electronic device.

The method according to an embodiment may include receiving the promised or designated response or the designated power delivery (PD) message between the electronic device and the external electronic device through USB communication with the external electronic device.

The method according to an embodiment may include recognizing the external electronic device in a state in which the second power is output through the VBUS path of the USB connector, and ignoring the recognition of the external electronic device in case that the recognition of the external electronic device corresponds to a first recognition after the connection through the CC pin of the USB connector

The method according to an embodiment may include performing, based on the recognition of the external electronic device, a function of the external electronic device in case that the recognition of the external electronic device does not correspond to the first recognition after the connection through the CC pin of the USB connector.

In the method according to an embodiment, the external electronic device may correspond to an on-the-go (OTG) device, and include a USB audio device, a USB Type-C earphone, or a digital-to-analog converter (DAC).

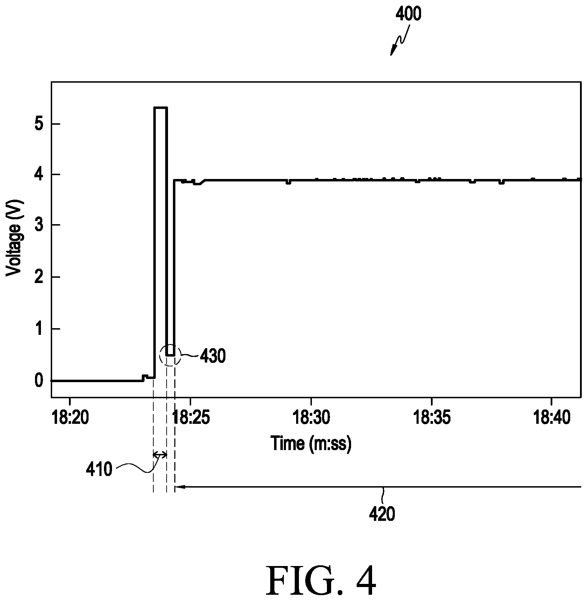

FIG. 4 illustrates a graph of a change in a voltage when an electronic device outputs first power of a first voltage from a battery by using first charging circuitry after suspending output of second power of a second voltage using second charging circuitry through a VBUS according to an embodiment.

Referring to FIG. 4, a horizontal axis in a voltage change graph 400 according to an embodiment may indicate time (minute (m): second (ss)), and a vertical axis may indicate a voltage (V).

In relation to the processor 220 according to an embodiment, an interval 430 in which the voltage rapidly drops may occur between an interval 410 in which second power of a second voltage (about 5V) is output using the second charging circuitry 282 and an interval 420 in which first power of a first voltage (e.g., about 3V) from a battery is output using the first charging circuitry 284.

The processor 220 according to an embodiment may identify releasing of the connection of the external electronic device 202 in the interval 430 in which the voltage rapidly drops, and may recognize again the connection of the external electronic device 202 as the first power of the first voltage (e.g., about 3V) from the battery is output.

During performing of an OTG function (e.g., a music playback function) through USB communication with the external electronic device 202 while simultaneously outputting 410 the second power of the second voltage (about 5V) by using the second charging circuitry 282, when the processor 220 according to an embodiment suspends the output of the second power and outputs 420 the first power of the first voltage (e.g., about 3V) from the battery by using the first charging circuitry 284, based on the information associated with the information on minimum operable voltage of the external electronic device 202, the performing of the music playback function through the USB communication with the external electronic device 202 may be also suspended due to the recognition of the releasing of the connection of the external electronic device 202 in the interval 430 in which the voltage rapidly drops.

The processor 220 according to an embodiment may perform processing so as to prevent the OTG function (e.g., the music playback function) performed through the USB communication with the external electronic device 202 from being suspended when the output of the second power of the second voltage using the second charging circuitry 282 is switched to the output of the first power of the first voltage using the first charging circuitry 284.

According to an embodiment, as the external electronic device 202 is connected (e.g., connected through a CC pin), the processor 220 may perform a USB enumeration operation while outputting the second power of the second voltage (e.g., 5V) through the USB connector 278 by using the second charging circuitry 282, so as to recognize the external electronic device 202 and acquire information associated with the operable voltage information of the external electronic device 202. According to an embodiment, the processor 220 may identify, based on the information associated with the operable voltage information of the external electronic device 202 (e.g., the identification information (e.g., the VID or the PID) of the external electronic device 202, the minimum operable voltage of the external electronic device 202, or the designated response or PD message defined by the vendor or promised between the electronic device 201 or the external electronic device 202), whether to change the second power of the second voltage, which is being output, to the first power of the first voltage of the battery 289 and output the same. According to an embodiment, when it is identified to change the second power of the second voltage, which is being output, to the first power of the first voltage of the battery 289 and output the same, the processor 220 may identify whether the recognition of the external electronic device 202 through the enumeration operation corresponds to the first recognition of the external electronic device 202 after the connection of the external electronic device 202 through the CC pin. According to an embodiment, when the recognition corresponds to the first recognition of the external electronic device 202 after the connection of the external electronic device 202 through the CC pin, the processor 220 may suspend (Vbus on) the provision of the second power of the second voltage using the second charging circuitry 282, and may perform control so that the first power of the first voltage from the battery 289 is provided (reverse bypass on) through the VBUS by using the first charging circuitry 284, without transferring an external electronic device 202 recognition event to a USB host manager.

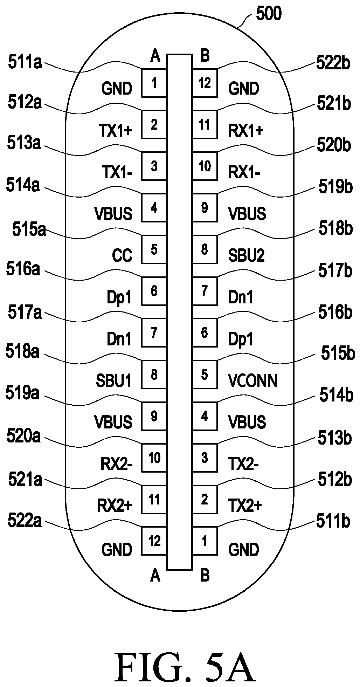

FIG. 5A illustrates pins of a USB connector according to an embodiment.

Referring to FIG. 5A, a USB connector 278 (e.g., the connection terminal 178 of FIG. 1) according to an embodiment may be a USB Type-C connector. The USB connector 278 may include multiple pins. The USB connector 278 according to an embodiment may include multiple first pins on a first surface (for example, surface A) corresponding to the forward direction and multiple second pins on a second surface (for example, surface B) corresponding to the reverse direction. For example, the multiple first pins may include a GND pin 51 1a, a TX1+ pin 512a, a TX1- pin 513a, a VBUS pin 514a, a CC pin 515a, a Dp1 pin 516a, a Dn1 pin 517a, an SBU1 pin 518a, a VBUS pin 519a, an RX2- pin 520a, an RX2+ pin 521a, and a GND pin 522a. For example, the multiple second pins may include a GND pin 511b, a TX2+ pin 512b, a TX2- pin 513b, a VBUS pin 514b, a VCONN pin 515b, a Dp 1 pin 516b, a Dn1 pin 517b, an SBU2 pin 518b, a VBUS pin 519b, an RX-1 pin 520b, an RX1+ pin 521b, and a GND pin 522b.

The electronic device 201 according to an embodiment may be electrically connected to the external electronic device 202 through the USB connector 278. The USB connector 278 according to an embodiment may form an exterior so that the USB connector 298 of the external electronic device 202 can be inserted in either the forward direction or the reverse direction. For example, the arrangement order of 12 pins formed on the first surface (e.g., surface A) may be formed to be identical to the arrangement order of 12 pins formed on the second surface (e.g., surface B), so that the USB connector 298 of the external electronic device 202 can be inserted in either direction of the first surface or the second surface. Due to such a structure, a user can insert the connector 298 of the external electronic device 202 into the connector 278 of the electronic device 201 in a 180-degree rotated state. According to an embodiment, multiple pins may be formed on the first surface (e.g., surface A) and the second surface (e.g., surface B) of a connection substrate formed inside the USB connector 278.

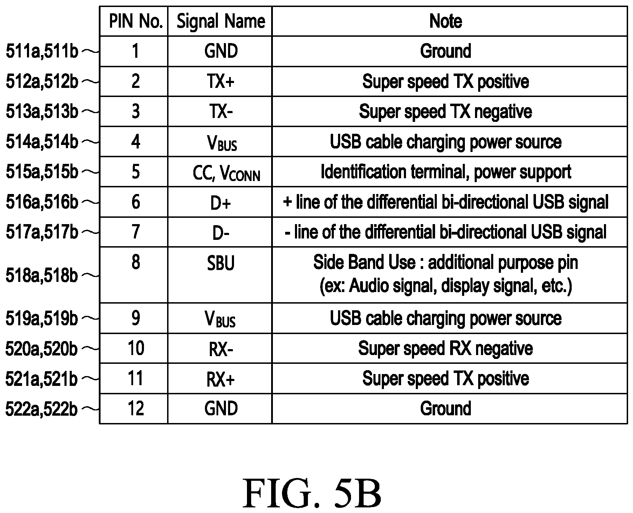

FIG. 5B is a table illustrating descriptions of pins of a USB connector according to various embodiments.

Referring to FIG. 5B, the TX1+ pin and the TX+2 pin 512a and 512b and the TX1-pin and the TX2- pin 513a and 513b may be pins for super speed transmission (super speed TX) which enables prompt transmission of data, the VBUS pins 514a and 514b may be pins for transfer of power from the electronic device 201 to the external electronic device 202, the CC pin may be a pin taking a role of an identification terminal, the VCONN pin 515b may be a pin for supporting plug power, the DP 1 pins 516 and 516b and the Dn1 pins 517a and 517b may be pins for different bidirectional USB signals, the SBU1 pin and the SBU2 pin 518a and 518b may be pins which can be used for various signals (e.g., an audio signal, a display signal, etc.) as spare pins, and the RX2-pin and the RX1- pin 520a and 520b and the RX2+ pin and the RX1+ pin 521a and 521b may be pins for super speed reception (super speed RX) enabling prompt reception of data. The electronic device 201 and/or the external electronic device 202 connected through the USB Type-C connector according to an embodiment may determine whether to operate in a host mode or a client mode through communication using the CC pin. According to an embodiment, the electronic device 201 and/or the external electronic device 202 may determine whether the mode is the host mode or the client mode by using an Rp/Rd resistor connected to the CC pin.

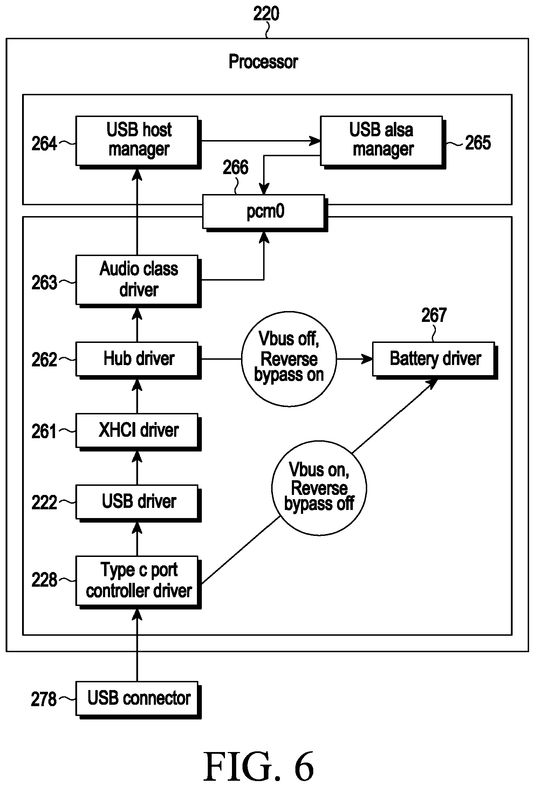

FIG. 6 illustrates software modules operating in a processor when switching a USB output voltage, based on a VID or a PID of an external electronic device according to an embodiment.

Referring to FIG. 6, software modules operating in the processor 220 according to an embodiment may include a Type-C port controller driver 228, a USB driver 222, an XHCI driver 261, a hub driver 261, an audio class driver 263, a USB host manager 264, a USB ALSA manager 265, and/or pcm0 266, and may further include other software modules. At least some of the Type-C port controller driver 228, the USB driver 222, the XHCI driver 261, the hub driver 261, the audio class driver 263, the USB host manager 264, the USB also manager 265, and the pcm0 266 may operate to be included in separate hardware.

The Type-C port controller driver 228 according to an embodiment may identify (or determine) a power role and/or a data role of the electronic device 201 as the connection (e.g., the connection through the CC pin) of the external electronic device 202 to the USB connector 278 is recognized. The Type-C port controller driver 228 according to an embodiment may identify whether the power role of the electronic device 201 is a role for performing charging or a source (or a role) for providing power, and transfer a Vbus on control signal to the battery driver 267, based on the identification that the power role of the electronic device 201 is the source. The Type-C port controller driver 228 according to an embodiment may transfer both a Vbus on signal and a reverse bypass off signal to the battery driver 267. The battery driver 267 according to an embodiment may perform control so that the second power of the designated second voltage higher than the first voltage of the battery 289 is output through the VBUS path through the second charging circuitry 282, based on the Vbus on signal (or the Vbus on signal and the reverse bypass off signal).

The Type-C port controller driver 228 according to an embodiment may identify whether the data role of the electronic device 201 is a host or a client, and notify the USB driver 222 of the same, based on the identification that the data role of the electronic device 201 is the host.

The USB driver 222 according to an embodiment may invoke, based on the determination that the data role of the electronic device 201 is the host, the XHCI driver 261 so that the electronic device 201 may operate as a USB host.

The XHCI driver 261 according to an embodiment may drive a host controller and set up a register, based on specifications for operating in the USB host, and the USB enumeration may be performed.

The hub driver 262 according to an embodiment may recognize the external electronic device 202 and acquire information associated with the operable voltage information of the external electronic device 202, based on that the USB enumeration is performed while the second power of the second voltage (about 5V) is output through the USB connector 278 by using the second charging circuitry 282. According to an embodiment, the hub driver 262 may identify whether to change the second power of the second voltage, which is being output, to the first power of the first voltage of the battery 289, based on the information associated with the operable voltage information of the external electronic device 202 (e.g., the identification information (e.g., the VID or the PID) of the external electronic device 202). According to an embodiment, when it is identified to change the second power of the second voltage, which is being output, to the first power of the first voltage of the battery 289 and output the same, the hub driver 262 may identify whether the recognition of the external electronic device 202 through the enumeration operation corresponds to the first recognition of the external electronic device 202 after the connection of the external electronic device 202 through the CC pin. According to an embodiment, when the recognition is the first recognition of the external electronic device 202 after the connection of the external electronic device 202 through the CC pin, the hub driver 262 may ignore an event of recognition of the external electronic device 202 without transferring the same to the audio class driver 263 and/or the USB host manger 264. According to an embodiment, the hub driver 262 may suspend (Vbus off) the provision of the second power of the second voltage using the second charging circuitry 282, and may transfer, to the battery driver 267, a signal causing the first power of the first voltage from the battery 289 to be provided (reverse bypass on) using the first charging circuitry 284 through the VBUS. The battery driver 267 according to an embodiment may suspend the output of the second power of the second voltage through the second charging circuitry 282 and perform control so that the first power of the first voltage of the battery 289 is output using the first charging circuitry 284 through the VBUS path, based on the Vbus off signal (or the Vbus off signal and the reverse bypass on signal).

When the recognition does not correspond to the first recognition of the external electronic device 202 after the first connection of the external electronic device 202 through the CC pin, the hub driver 262 according to an embodiment may transfer, to the audio class driver 263 and/or the USB host manager 264, the event of recognition of the external electronic device 202. According to an embodiment of the disclosure, it is described, through an example, that the external electronic device 202 is a USB audio device and the audio class driver 263 operates, but if the external electronic device 202 recognized through a descriptor is another device (e.g., memory, a fan, or other OTG devices), another class driver may operate.

The audio class driver 263 according to an embodiment may request, from the USB host manager 264, audio data to be transferred to the external electronic device 202.

The USB host manager 264 according to an embodiment may perform control to process audio data to be transferred to the external electronic device 202 by using the USB Advanced Linux Sound Architecture (ALSA) manager 265 and store the same in the pcm0 266 (e.g., a buffer module).

The audio class driver 263 according to an embodiment may acquire the audio data stored in the pcm0 266 (e.g., the buffer module) and transfer the same to the hub driver 262. The hub driver 262 according to an embodiment may perform control so that the audio data is output to the USB connector 278 through a downstream port through the XHCI driver 261, the USB driver 222, and the Type-C port controller driver 228.

As described above, the hub driver 262 according to an embodiment may perform only voltage switching during the first recognition of the external electronic device 202 after the connection of the external electronic device 202 through the CC pin, and may cause the audio class driver 263 and/or the USB host manager 264 to operate during the recognition of the external electronic device 202 after the first recognition while the connection through the CC pin is maintained, thereby preventing a phenomenon in which the OTG function is suspended from occurring due to switching of the operating voltage of the audio class driver 263 and/or the USB host manager 264.

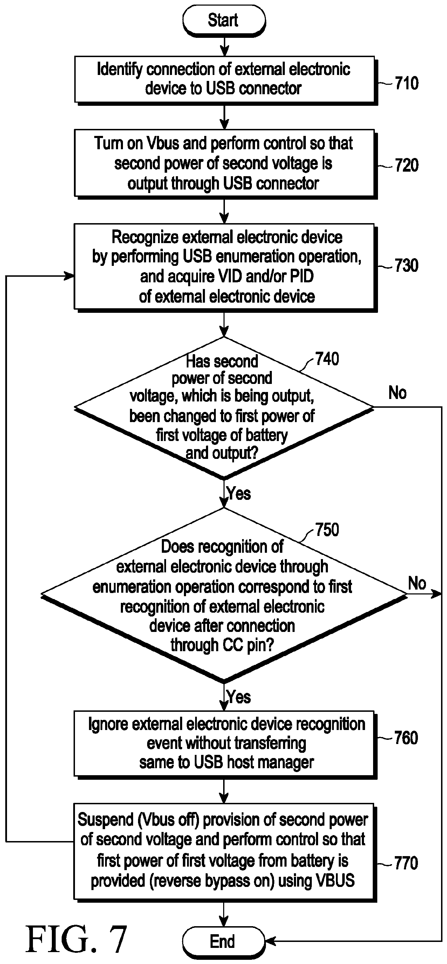

FIG. 7 is a flow chart illustrating an operation in a case where an electronic device switches, based on a VID or a PID of an external electronic device, second power of a second voltage, which is being provided to the external electronic device, to first power of a first voltage of a battery according to an embodiment.

Referring to FIG. 7, a processor (e.g., the processor 120 of FIG. 1 or the processor 220 of FIG. 2) of an electronic device (e.g., the electronic device 101 of FIG. 1 or the electronic device 201 of FIG. 2) according to an embodiment may perform at least one operation among operations 710 to 770.

In operation 710, the processor 220 according to an embodiment may identify connection of the external electronic device 202 to the USB connector 278. As a USB plug of the external electronic device (e.g., a USB earphone) is inserted into the USB connector 278 (e.g., a USB receptacle), the processor 220 according to an embodiment may detect the connection through a CC pin, thereby identifying the connection of the external electronic device 202.

In operation 720, the processor 220 according to an embodiment may change the state of a Vbus to an ON state upon the connection of the external electronic device 202 (e.g., the connection through the CC pin), so that the second power of the second voltage (about 5V) is output using the second charging circuitry 282 through the USB connector 278. According to an embodiment, the operation of changing the state of the Vbus to the ON state may mean an operation of activating a Vbus pin.

In operation 730, the processor 220 according to an embodiment may perform a USB enumeration operation to recognize the external electronic device 202 and acquire a VID and/or a PID of the external electronic device 202.

In operation 740, the processor 220 according to an embodiment may identify, based on the VID and/or the PID, whether to change the second power of the second voltage, which is being output, to the first power of the first voltage of the battery 289, and output the same. According to an embodiment, the processor 220 may identify whether the acquired VID and/or PID corresponds to a VID and/or a PID corresponding to an external electronic device operable at the first voltage lower than the second voltage.

In operation 750, when it is identified to change the second power of the second voltage, which is being output, to the first power of the first voltage of the battery 289 and output the same, the processor 220 according to an embodiment may identify whether the recognition of the external electronic device 202 through the enumeration operation is the first recognition of the external electronic device 202 after the connection of the external electronic device 202 through the CC pin.

In operation 760, when the recognition of the external electronic device 202 through the enumeration operation corresponds to the first recognition of the external electronic device 202 after the connection of the external electronic device 202 through the CC pin, the processor 220 according to an embodiment may ignore an event of the recognition of the external electronic device 202, without transferring the same to a USB host manager.

In operation 770, the processor 220 according to an embodiment may suspend (Vbus off) the provision of the second power of the second voltage using the second charging circuitry 282, and may perform control so that the first power of the first voltage from the battery 289 is provided (reverse bypass on) using the first charging circuitry 284 through the VBUS.

The processor 220 according to an embodiment may proceed to operation 730 after performing operation 770 and perform the USB enumeration operation again to recognize the external electronic device 202 again. The processor 220 according to an embodiment may perform the recognition again while controlling the first power of the first voltage from the battery 289 to be provided (reverse bypass on) using the VBUS, thereby preventing OTG function suspension due to voltage switching from occurring.

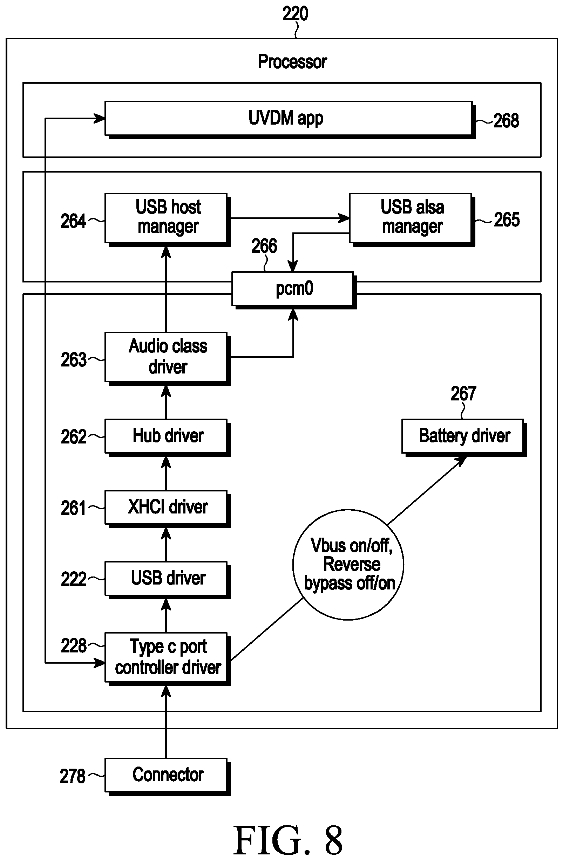

FIG. 8 illustrates software modules operating in a processor in a case of switching a USB output voltage, based on minimum operable voltage of an external electronic device, acquired through UVDM communication with the external electronic device according to an embodiment.

Referring to FIG. 8, software modules operating in a processor 220 according to an embodiment may include a Type-C controller driver 228, a USB driver 222, an XHCI driver 261, a hub driver 261, an audio class driver 263, a USB host manager 264, a USB ALSA manager 265, pcm0 266, and/or a UVDM app 268, and may further include other software modules. At least some of the Type-C port controller driver 228, the USB driver 222, the XHCI driver 261, the hub driver 261, the audio class driver 263, the USB host manager 264, the USB ALSA manager 265, the pcm0 266, and the UVDM app 268 according to an embodiment may operate to be included in separate hardware.

The Type-C port controller driver 228 according to an embodiment may identify (or determine) a power role and/or a data role of the electronic device 201 as the connection (e.g., the connection through the CC pin) of the external electronic device 202 to the USB connector 278 is recognized. The Type-C port controller driver 228 according to an embodiment may identify whether the power role of the electronic device 201 is a role for performing charging or a source (or a role) for providing power, and transfer a Vbus on control signal to the battery driver 267, based on the identification that the power role of the electronic device 201 is the source. The Type-C port controller driver 228 according to an embodiment may transfer both a Vbus on signal and a reverse bypass off signal to the battery driver 267. The battery driver 267 according to an embodiment may perform control so that the second power of the designated second voltage higher than the first voltage of the battery 289 is output through the VBUS path through the second charging circuitry 282, based on the Vbus on signal (or the Vbus on signal and the reverse bypass off signal).

The Type-C port controller driver 228 according to an embodiment may cause the second power of the second voltage to be output through the VBUS path, then perform connection of PD communication and activate the UVDM app 268, and may perform PD communication-based UVDM communication with the external electronic device 202 through the UVDM app 268. The Type-C port controller driver 228 according to an embodiment may identify (or receive) information on minimum operable voltage of the external electronic device 202 from the external electronic device 202 through the UVDM communication. According to an embodiment, the Type-C port controller driver 228 may identify whether to change the second power of the second voltage, which is being output, to the first power of the first voltage of the battery 289, based on the acquired information on minimum operable voltage of the external electronic device 202, and output the same. According to an embodiment, the Type-C port controller driver 228 may identify to change the second power of the second voltage, which is being output, to the first power of the first voltage of the battery 289 and output the same when the minimum operable voltage of the external electronic device 202 is lower than the first voltage of the battery 289. According to an embodiment, the Type-C port controller driver 228 may suspend (Vbus off) the provision of the second power of the second voltage using the second charging circuitry 282, and may transfer, to the battery driver 267, a signal causing the first power of the first voltage from the battery 289 to be provided (reverse bypass on) using the first charging circuitry 284 through the VBUS. The battery driver 267 according to an embodiment may suspend the output of the second power of the second voltage through the second charging circuitry 282 and perform control so that the first power of the first voltage of the battery 289 is output using the first charging circuitry 284 through the VBUS path, based on the Vbus off signal (or the Vbus off signal and the reverse bypass on signal).

The Type-C port controller driver 228 according to an embodiment may identify whether the data role of the electronic device 201 is a host or a client, and may notify the USB driver 222 of the same, based on the identification that the data role of the electronic device 201 is the host. The USB driver 222 according to an embodiment may invoke, based on the determination that the data role of the electronic device 201 is the host, the XHCI driver 261 so that the electronic device 201 may operate as a USB host. The XHCI driver 261 according to an embodiment may drive a host controller and set up a register, based on specifications for operating in the USB host, and the USB enumeration may be performed.

The hub driver 262 according to an embodiment may recognize the external electronic device 202, based on that the USB enumeration is performed while the second power of the second voltage (about 5V) is output through the USB connector 278 by using the second charging circuitry 282. According to an embodiment, when it is identified to change the second power of the second voltage, which is being output, to the first power of the first voltage of the battery 289 and output the same, the hub driver 262 may identify whether the recognition of the external electronic device 202 through the enumeration operation corresponds to the first recognition of the external electronic device 202 after the connection of the external electronic device 202 through the CC pin. According to an embodiment, when the recognition is the first recognition of the external electronic device 202 after the connection of the external electronic device 202 through the CC pin, the hub driver 262 may ignore an event of recognition of the external electronic device 202 without transferring the same to the audio class driver 263 and/or the USB host manger 264.

According to an embodiment, when the recognition does not correspond to the first recognition of the external electronic device 202 after the first connection of the external electronic device 202 through the CC pin, the hub driver 262 may transfer, to the audio class driver 263 and/or the USB host manager 264, the event of recognition of the external electronic device 202.

The audio class driver 263 according to an embodiment may request, from the USB host manager 264, audio data to be transferred to the external electronic device 202.

The USB host manager 264 according to an embodiment may perform control to process audio data to be transferred to the external electronic device 202 by using the USB Advanced Linux Sound Architecture (ALSA) manager 265 and store the same in the pcm0 266 (e.g., a buffer module).

The audio class driver 263 according to an embodiment may acquire the audio data stored in the pcm0 266 (e.g., the buffer module) and transfer the same to the hub driver 262. The hub driver 262 according to an embodiment may perform control so that the audio data is output to the USB connector 278 through a downstream port through the XHCI driver 261, the USB driver 222, and the Type-C port controller driver 228.

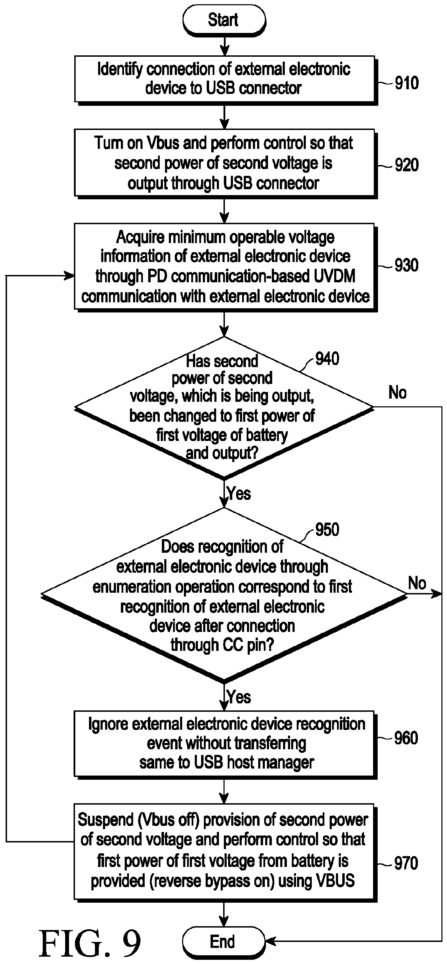

FIG. 9 is a flow chart illustrating an operation in a case where an electronic device switches, based on information on minimum operable voltage of an external electronic device, second power of a second voltage, which is being provided to the external electronic device, to first power of a first voltage of a battery according to an embodiment.

Referring to FIG. 9, a processor (e.g., the processor 120 of FIG. 1 or the processor 220 of FIG. 2) of an electronic device (e.g., the electronic device 101 of FIG. 1 or the electronic device 201 of FIG. 2) according to an embodiment may perform at least one operation among operations 910 to 970.

In operation 910, the processor 220 according to an embodiment may identify connection of the external electronic device 202 to the USB connector 278. As a USB plug of the external electronic device (e.g., a USB earphone) is inserted into the USB connector 278 (e.g., a USB receptacle), the processor 220 according to an embodiment may detect the connection through a CC pin, thereby identifying the connection of the external electronic device 202.

In operation 920, the processor 220 according to an embodiment may turn on a Vbus (or change the state of the Vbus to an ON state) upon the connection of the external electronic device 202 (e.g., the connection through the CC pin), so that the second power of the second voltage (about 5V) is output using the second charging circuitry 282 through the USB connector 278.

In operation 930, the processor 220 according to an embodiment may acquire information on minimum operable voltage of the external electronic device 202 through PD communication-based UVDM communication with the external electronic device 202.

In operation 940, the processor 220 according to an embodiment may identify, based on the information on minimum operable voltage of the external electronic device 202, whether to change the second power of the second voltage, which is being output, to the first power of the first voltage of the battery 289, and output the same. According to an embodiment, when the minimum operable voltage of the external electronic device 202 is lower than the first voltage of the battery 289, the processor 220 may identify to change the second power of the second voltage, which is being output, to the first power of the first voltage of the battery 289 and output the same.

In operation 950, when it is identified to change the second power of the second voltage, which is being output, to the first power of the first voltage of the battery 289 and output the same, the processor 220 according to an embodiment may identify whether the recognition of the external electronic device 202 through the enumeration operation is the first recognition of the external electronic device 202 after the connection of the external electronic device 202 through the CC pin.

In operation 960, when the recognition of the external electronic device 202 through the enumeration operation corresponds to the first recognition of the external electronic device 202 after the connection of the external electronic device 202 through the CC pin, the processor 220 according to an embodiment may ignore an event of the recognition of the external electronic device 202, without transferring the same to a USB host manager.

In operation 970, the processor 220 according to an embodiment may suspend (Vbus off) the provision of the second power of the second voltage using the second charging circuitry 282, and may perform control so that the first power of the first voltage from the battery 289 is provided (reverse bypass on) using the first charging circuitry 284 through the VBUS.

The processor 220 according to an embodiment may proceed to operation 930 after performing operation 970 and perform the USB enumeration operation again to recognize the external electronic device 202 again. The processor 220 according to an embodiment may perform the recognition again while controlling the first power of the first voltage from the battery 289 to be provided (reverse bypass on) using the VBUS, thereby preventing OTG function suspension due to voltage switching from occurring.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140 or the electronic device 301) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, with respect to a non-transitory storage medium storing instructions, the instructions are configured to, when executed by an electronic device, cause the electronic device to perform on or more operations, wherein the one or more operations may include identifying connection of an external electronic device through a USB connector, outputting second power of a designated second voltage higher than a first voltage of a battery by using second charging circuitry through a designated pin (e.g., a VBUS path or a VBUS pin) associated with power transfer of the USB connector, based on the identification of the connection of the external electronic device, obtaining information associated with an operable voltage of the external electronic device while the second power is output, and suspending the output of the second power, based on the obtained information to output first power of the first voltage from the battery by using first charging circuitry through the designated pin.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101, 201) comprising:
a battery (189, 289);
a universal serial bus, USB, connector (178, 278);
first charging circuitry (284);
second charging circuitry (282);
a processor (120, 220); and
memory (230) storing instructions that, when executed by the processor (120, 220), cause the electronic device (101, 201) to:
control (310) the second charging circuitry (282) to output a second power of a designated second voltage through a designated pin associated with power transfer of the USB connector (178, 278), based on identification of connection of an external electronic device (202) through the USB connector (178, 278); wherein the designated second voltage is higher than a first voltage of the battery (189, 289);
obtain (320) information associated with an operable voltage of the external electronic device (202) while the second power of the second voltage is output;
suspend (330) the output of the second power of the second voltage, based on the obtained information; and
control the first charging circuitry (284) to output a first power of the first voltage from the battery (189, 289) through the designated pin.

2. The electronic device of claim 1, wherein the instructions are further configured to, when executed by the processor (120, 220), cause the electronic device to identify the connection of the external electronic device by detecting connection through a configuration channel, CC, pin of the USB connector,
wherein the first charging circuitry (284) is configured to charge the battery(189, 289) using power received from outside or provide the first power of the first voltage from the battery (189, 289) to the USB connector (178, 278),
wherein the second charging circuitry (282) is configured to perform fast charging of the battery(189, 289) using power received from outside or provide the second power of the second voltage to the USB connector (178, 278) by converting the first power of the first voltage from the battery(189, 289) into the second power of the second voltage, and
wherein the designated pin associated with the power transfer is a VBUS pin.

3. The electronic device of claim 1 or claim 2, wherein the information associated with the operable voltage of the external electronic device comprises identification information of the external electronic device, information on the minimum operable voltage of the external electronic device, and a promised or designated response or a designated power delivery, PD, message between the electronic device and the external electronic device.

4. The electronic device of one of claims 1 to 3, wherein the instructions are further configured to, when executed by the processor (120, 220), cause the electronic device to obtain a VID and/or a PID as the identification information of the external electronic device through performing of USB enumeration with the external electronic device.

5. The electronic device of one of claims 1 to 4, wherein the instructions are further configured to, when executed by the processor (120, 220), cause the electronic device to receive the information on the minimum operable voltage of the external electronic device through PD communication-based UVDM communication with the external electronic device.

6. The electronic device of one of claims 1 to 5, wherein the instructions are further configured to, when executed by the processor (120, 220), cause the electronic device to receive the promised or designated response or the designated power delivery, PD, message between the electronic device and the external electronic device through USB communication with the external electronic device.

7. The electronic device of one of claims 1 to 6, wherein the instructions are further configured to, when executed by the processor (120, 220), cause the electronic device to recognize the external electronic device in a state in which the second power is output through the designated pin of the USB connector, and ignore the recognition of the external electronic device in case that the recognition of the external electronic device corresponds to a first recognition after the connection through the CC pin of the USB connector.

8. The electronic device of one of claims 1 to 7, wherein the instructions are further configured to, when executed by the processor (120, 220), cause the electronic device to perform a function of the external electronic device based on the recognition of the external electronic device when the recognition of the external electronic device does not correspond to the first recognition after the connection through the CC pin of the USB connector.

9. A method for controlling power provided by an electronic device (101, 201) to an external electronic device, the method comprising:
Identifying (710, 910) connection of the external electronic device through a universal serial bus, USB, connector (178, 278);
Outputting (720, 920) a second power of a designated second voltage by using second charging circuitry (282) through a designated pin associated with power transfer of the USB connector, based on the identification of the connection of the external electronic device; wherein the designated second voltage is higher than a first voltage of a battery (189, 289);
obtaining information associated with an operable voltage of the external electronic device while the second power is output; and
suspending (770, 970) the output of the second power of the second voltage, based on the obtained information, and outputting a first power of the first voltage from the battery by using first charging circuitry (284) through the designated pin.

10. The method of claim 9, further comprising identifying the connection of the external electronic device by detecting connection through a configuration channel, CC, pin of the USB connector,
wherein the designated pin associated with the power transfer corresponds to a VBUS pin.

11. The method of claim 9 or claim 10,
wherein the information associated with the operable voltage of the external electronic device comprises identification information of the external electronic device, information on minimum operable voltage of the external electronic device, and a promised or designated response or a designated power delivery, PD, message between the electronic device and the external electronic device.

12. The method of one of claims 9 to 11, further comprising obtaining (730) a VID and/or a PID as the identification information of the external electronic device through performing of USB enumeration with the external electronic device.

13. The method of one of claims 9 to 12, further comprising receiving (930) the information on minimum operable voltage of the external electronic device through PD communication-based UVDM communication with the external electronic device.

14. The method of one of claims 9 to 13, further comprising receiving the promised or designated response or the designated power delivery, PD, message between the electronic device and the external electronic device through USB communication with the external electronic device.

15. A non-transitory storage medium storing instructions, wherein the instructions configured to, when executed by an electronic device, cause the electronic device to:
identify connection of an external electronic device through a universal serial bus, USB, connector (178, 278);
output second power of a designated second voltage higher than a first voltage of a battery (189, 289) by using second charging circuitry (282) through a designated pin in association with power transfer of the USB connector, based on the identification of the connection of the external electronic device;
obtain information associated with an operable voltage of the external electronic device while the second power is output; and
suspend the output of the second power, based on the obtained information, and output first power of the first voltage from the battery by using first charging circuitry (284) through the designated pin.
